# EUROPEAN PATENT APPLICATION

(11) **EP 3 939 722 A1**
(43) Date of publication of application: **19.01.2022**
(21) Application number: 20929682.1
(22) Date of filing: 15.10.2020
(51) Int. Cl.: B22F 3/22, H01M 8/02

(54) **PREPARATION METHOD FOR GAS DIFFUSION LAYER HAVING GRADIENT APERTURE FOR SPE ELECTROLYTIC BATH**

(30) Priority: 27.04.2020 CN 202010346248
(71) Applicant: Huaneng Clean Energy Research Institute, Beijing 102209 (CN)
(72) Inventor: REN, Zhibo, Beijing 102209 (CN); YU, Zhiyong, Beijing 102209 (CN); ZHANG, Chang, Beijing 102209 (CN); GAO, Shiwang, Beijing 102209 (CN); WANG, Shaomin, Beijing 102209 (CN)
(74) Representative: Groth & Co. KB
(86) International application number: PCT/CN2020/121190
(87) International publication number: WO 2021/218047

(57) **Abstract**

Disclosed is a method for preparing a gas diffusion layer with a gradient pore size for an SPE electrolyser, which comprises: firstly, mixing a titanium powder with solvent, binder and plasticizer under mechanical stirring to prepare a slurry; secondly, tape casting the slurry in a tape casting machine to obtain a flat blank; then placing the flat blank into a vacuum furnace to perform temperature programmed sintering to obtain a microporous diffusion layer; and finally spraying titanium powder on the microporous diffusion layer by vacuum plasma spraying method to prepare a macroporous diffusion layer, thereby obtaining a gas diffusion layer with gradient pore size for an SPE electrolyser. The gas diffusion layer prepared by the present invention has adjustable size and width and has a gradient pore size, which can promote gas-liquid mass transfer in the electrolysers and improve the performance of the electrolysers.

## Description

### Technical field

The present invention relates to the field of hydrogen production by water electrolysis, in particular to a method for preparing a gas diffusion layer with a gradient pore size for an SPE electrolyser.

### Background of the Invention

Hydrogen production by electrolysis can realize large-scale and low-cost energy integration and utilization through hydrogen storage, which is one of the most promising renewable energy integration methods and has been widely recognized in the world. Hydrogen production by electrolysis technology mainly includes the traditional alkaline water electrolysis and the new developed solid polymer electrolyte (SPE) water electrolysis. Compared with alkaline electrolysers, SPE electrolysers have advantages of high efficiency, compact device and high hydrogen purity. In addition, SPE electrolysers, which can be start-up and shutdown rapidly and are applicable to operate over a wide load range, show unique competitiveness when integrated with intermittent and fluctuating renewable energy.

SPE electrolyser is mainly composed of bipolar plate, cathode/anode gas diffusion layer, cathode/anode catalytic layer, ion exchange membrane, etc. Gas diffusion layer is usually a conductive porous material, which plays multiple roles such as supporting membrane electrode, collecting current and transferring gas-liquid, and is one of the key components that affect the performance of electrolyser. Due to the strong oxidizing reactive oxygen species produced by the anode during water electrolysis and the corrosion in acidic environment, sintered titanium sheets are usually used as anode gas diffusion layer in commercial SPE electrolyser. The pore size of sintered porous titanium sheet can significantly affect its internal gas-liquid transmission, so optimizing the pore size of diffusion layer becomes an important means to improve the performance of electrolysers.

Commercial sintered titanium sheets are produced by stamping titanium powder and then calcination at high temperature. The size of gas diffusion layer is limited by the size of stamping instrument and die, and available products can hardly meet the demand of large-scale electrolysers. In addition, gas diffusion layers produced by traditional process have single pore size, which is difficult to effectively promote gas-liquid mass transfer in electrolyser.

### Summary of the Invention

Provided in the present invention is a method for preparing a gas diffusion layer with a gradient pore size for an SPE electrolyser to overcome the deficiency of the prior art. The gas diffusion layer prepared by the present invention has adjustable size and width and has a gradient pore size, which can promote gas-liquid mass transfer in the electrolysers and improve the performance of the electrolysers.

To achieve the above purposes, following technical solutions are provided in the present invention:
A method for preparing a gas diffusion layer with a gradient pore size for an SPE electrolyser, comprising the following steps:
(1) slurry preparation: mixing a titanium powder with solvent, binder and plasticizer under mechanical stirring to prepare a slurry;
(2) tape casting to form a blank: tape casting the slurry obtained in step (1) in a tape casting machine to obtain a flat blank;
(3) vacuum sintering: placing the flat blank obtained in step (2) to a vacuum furnace to perform temperature programmed sintering to obtain a microporous diffusion layer; and
(4) spraying: spraying titanium powder on the microporous diffusion layer obtained in step (3) by vacuum plasma spraying method to prepare a macroporous diffusion layer, thereby obtaining a gas diffusion layer with gradient pore size for an SPE electrolyser.

Preferably, the titanium powder in step (1) is an atomized spherical titanium powder with a particle size of 30-80 µm.

Preferably, in step (1), the solvent is ethanol, toluene or methanol, the binder is polyvinyl butyral resin or acrylic resin, and the plasticizer is PEG400.

Preferably, in step (1), the titanium powder accounts for 65%-85% by mass, the solvent accounts for 10%-30% by mass, the binder accounts for 1%-2% by mass, and the plasticizer accounts for 3%-4% by mass.

Preferably, the mechanical stirring in step (1) lasts for 8-24 h.

Preferably, in step (2), the tape casting in step (2) has a casting speed of 200-400 mm/min, a casting width of 0.5-2 m, and a casting thickness of 200-800 µm.

Preferably, in step (3), the temperature-programmed sintering comprises: raising the temperature from room temperature to 400-500°C in argon gas flow at a pressure of 10-20 mbar, and maintaining the temperature constant for 10-60 min; and continuing raising the temperature to 800-1200 °C in vacuum at a vacuum degree of 10⁻⁴-10⁻⁵ mbar, and maintaining the temperature constant for 120-240 min; wherein during the whole process, the temperature is raised at a rate of 1-5 °C/min.

Preferably, in step (4), the vacuum plasma spraying method is carried out using a hydride-dehydrate titanium powder of irregular shape having a particle size of 100-200 µm as a coating, at a plasma enthalpy of 10-20 MJ/kg, a spraying speed of 300-500 mm/s and a spraying pressure of 30-50 mbar, to reach a coating thickness of 100-400 µm, and the substrate is preheated to 200-300°C prior to the spraying.

Compared with the prior art, the present invention has the following beneficial technical effects:
In the preparation method for the gas diffusion layer with gradient pore size for SPE electrolyser, a tape casting method is adopted to prepare a microporous diffusion layer, and the operation process is simple and suitable for wide width production. Vacuum plasma spraying is used to prepare a macroporous layer on the surface of the microporous layer, which can not only ensure the bonding strength between layers, but also form gradient pore size within the diffusion layer. The microporous structure is beneficial to inhibit the aggregation and growth of bubbles on the surface of the membrane electrode, and the macroporous structure is beneficial to the liquid transfer from the bipolar plate sides to electrode surface.

The combination of the two pore structures promotes the gas-liquid mass transfer and reduces the energy consumption by hydrogen production from water electrolysis.

### Brief Description of the Drawings

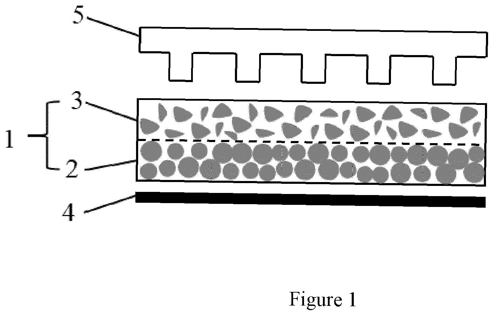

Figure 1 shows a schematic diagram of a gas diffusion layer with a gradient pore size for an SPE electrolyser.

Wherein, 1- gas diffusion layer, 2- microporous layer, 3- macroporous layer, 4-catalytic layer, 5- bipolar plate.

### Detailed Description of Embodiments

In order to better understand the invention, the invention is further described in detail below.

Provided is a method for preparing a gas diffusion layer with a gradient pore size for an SPE electrolyser, comprising the following steps:
(1) Slurry preparation: By mass fraction, 65%-85% of titanium powder is mixed with 10%-30% of solvent, 1%-2% of binder and 3%-4% of plasticizer by mechanical stirring for 8-24 h to prepare a slurry; wherein, the titanium powder is an atomized spherical titanium powder with a particle size of 30-80 µm, the solvent is ethanol, toluene or methanol, the binder is polyvinyl butyral (PVB) resin or acrylic resin, and the plasticizer is PEG400.
(2) Tape casting to form blank: Tape casting is performed using the slurry obtained in step (1) in a tape casting machine, at a speed of 200-400 mm/min, a width of 0.5-2 m and a thickness of 200-800 µm, to obtain a flat blank.
(3) Vacuum sintering: The flat blank obtained in step (2) is placed to a vacuum furnace to perform temperature programmed sintering. In particular, the temperature-programmed sintering comprises raising the temperature from room temperature to 400-500°C in argon gas flow at a pressure of 10-20 mbar, and maintaining the temperature constant for 10-60 min; and continuing raising the temperature to 800-1200 °C in vacuum at a vacuum degree of 10⁻⁴-10⁻⁵ mbar, and maintaining the temperature constant for 120-240 min; wherein during the whole process, the temperature is raised at a rate of 1- 5 °C /min, thereby obtaining a microporous diffusion layer.
(4) Spraying: Titanium powder is sprayed on the microporous diffusion layer obtained in step (3) by vacuum plasma spraying method to prepare a macroporous diffusion layer. The vacuum plasma spraying method is performed using a hydride-dehydrate titanium powder of irregular shape having a particle size of 100-200 µm as a coating, at a plasma enthalpy of 10-20 MJ/kg, a spraying speed of 300-500 mm/s and a spraying pressure of 30-50 mbar, to reach a coating thickness of 100-400 µm, thus obtaining a gas diffusion layer with a gradient pore size for an SPE electrolyser; wherein the substrate is preheated to 200°C-300°C prior to the spraying.

The present invention is further described in detail in combination with embodiments below:

### Embodiment 1

Provided is a method for preparing a gas diffusion layer with a gradient pore size for an SPE electrolyser, comprising the following steps:
(1) By mass fraction, 70% of atomized spherical titanium powder having a particle size of 45 µm, 25% of ethanol, 1.2% of polyvinyl butyral resin and 3.8% of PEG400 are mixed by mechanical stirring for 12 h to prepare a slurry.
(2) Tape casting is performed using the slurry obtained in step (1) in a tape casting machine, at a speed of 250 mm/min, a width of 1 m and a thickness of 400 µm, to obtain a flat blank.
(3) The flat blank obtained in step (2) is placed to a vacuum furnace, and heated from room temperature to 500 °C at a rate of 2°C /min in argon gas flow at a pressure of 15 mbar and maintained constant at this temperature for 30 min; Then the argon gas flow is stopped, and heating is continued at a rate of 2 °C /min in vacuum at a vacuum degree of 10⁻⁵ mbar to reach 1000 °C and maintain the temperature constant for 120 min, followed by naturally cooling to obtain a microporous diffusion layer.
(4) The microporous diffusion layer obtained in step (3) is preheated to 250°C to use as substrate. A hydride-dehydrate titanium powder of irregular shape having a particle size of 150 µm is sprayed on the surface of the substrate by vacuum plasma spraying. Plasma enthalpy is set at 10 MJ/kg, and the spraying is performed at a speed of 350 mm/s and a pressure of 50 mbar to reach a thickness of 200 µm, thereby obtaining the gas diffusion layer with a gradient pore size.

The microporous diffusion layer 2 of the prepared gas diffusion layer 1 with a gradient pore size has an average pore size of 4.2 µm and a porosity of 35%. The macroporous diffusion layer 3 has an average pore size of 15.3 µm and a porosity of 24%. A commercial gas diffusion layer has an average pore size of 10 µm and a porosity of 30%. The prepared gas diffusion layer with gradient pose size and the commercial gas diffusion layer are respectively installed between a catalytic layer 4 and a bipolar plate 5 to assemble an acid proton exchange membrane electrolyser so as to carry out water electrolysis experiments. When operated at the current density of 2 A/cm², the electrolyser assembled with the prepared gas diffusion layer with gradient pose size has a cell voltage of 1.92V, and the electrolyser assembled with using the commercial gas diffusion layer has a cell voltage of 1.98V.

### Embodiment 2

Provided is a method for preparing a gas diffusion layer with a gradient pore size for an SPE electrolyser, comprising the following steps:
(1) By mass fraction, 80% of atomized spherical titanium powder having a particle size of 35 µm, 15% of ethanol, 2% of polyvinyl butyral resin and 3% of PEG400 are mixed by mechanical stirring for 16 h to prepare a slurry.
(2) Tape casting is performed using the slurry obtained in step (1) in a tape casting machine, at a speed of 200 mm/min, a width of 2 m and a thickness of 300 µm, to obtain a flat blank.
(3) The flat blank obtained in step (2) is placed to a vacuum furnace, and heated from room temperature to 450 °C at a rate of 2°C /min in argon gas flow at a pressure of 20 mbar and maintained constant at this temperature for 45 min. Then the argon gas flow is stopped, and heating is continued at a rate of 2 °C /min in vacuum at a vacuum degree of 10⁻⁴ mbar to reach 950 °C and maintain the temperature constant for 150 min, followed by naturally cooling to obtain a microporous diffusion layer.
(4) The microporous diffusion layer obtained in step (3) is preheated to 200°C to use as substrate. A hydride-dehydrate titanium powder of irregular shape having a particle size of 200 µm is sprayed on the surface of the substrate by vacuum plasma spraying. Plasma enthalpy is set at 12 MJ/kg, and the spraying is performed at a speed of 300 mm/s and a pressure of 50 mbar to reach a thickness of 300 µm, thereby obtaining the gas diffusion layer with a gradient pore size.

The microporous diffusion layer 2 of the prepared gas diffusion layer 1 with a gradient pore size has an average pore size of 4.8 µm and a porosity of 37%. The macroporous diffusion layer 3 has an average pore size of 16.5 µm and a porosity of 21%. A commercial gas diffusion layer has an average pore size of 10 µm and a porosity of 30%. The prepared gas diffusion layer with gradient pose size and the commercial gas diffusion layer are respectively used to assemble an acid proton exchange membrane electrolyser so as to carry out water electrolysis experiments. When operated at the current density of 2 A/cm², the electrolyser assembled with the prepared gas diffusion layer with gradient pose size has a cell voltage of 1.89V, and the electrolyser assembled with the commercial gas diffusion layer has a cell voltage of 1.98V.

### Embodiment 3

Provided is a method for preparing a gas diffusion layer with a gradient pore size for an SPE electrolyser, comprising the following steps:
(1) By mass fraction, 80% of atomized spherical titanium powder having a particle size of 30 µm, 15% of methanol, 1.0% of polyvinyl butyral resin and 4.0% of PEG400 are mixed by mechanical stirring for 24 h to prepare a slurry.
(2) Tape casting is performed using the slurry obtained in step (1) in a tape casting machine, at a speed of 350 mm/min, a width of 1.0 m and a thickness of 600 µm, to obtain a flat blank.
(3) The flat blank obtained in step (2) is placed to a vacuum furnace, and heated from room temperature to 475 °C at a rate of 3°C /min in argon gas flow at a pressure of 10 mbar and maintained constant at this temperature for 60 min. Then the argon gas flow is stopped, and heating is continued at a rate of 3 °C /min in vacuum at a vacuum degree of 10⁻⁵ mbar to reach 1200 °C and maintain the temperature constant for 120 min, followed by naturally cooling to obtain a microporous diffusion layer.
(4) The microporous diffusion layer obtained in step (3) is preheated to 275°C to use as substrate; A hydride-dehydrate titanium powder of irregular shape having a particle size of 100 µm is sprayed on the surface of the substrate by vacuum plasma spraying. Plasma enthalpy is set at 18 MJ/kg, and the spraying is performed at a speed of 500 mm/s and a pressure of 45 mbar to reach a thickness of 200 µm, thereby obtaining the gas diffusion layer with a gradient pore size.

The microporous diffusion layer 2 of the prepared gas diffusion layer 1 with a gradient pore size has an average pore size of 4.6 µm and a porosity of 37%. The macroporous diffusion layer 3 has an average pore size of 13.7 µm and a porosity of 26%. A commercial gas diffusion layer has an average pore size of 10 µm and a porosity of 30%. The prepared gas diffusion layer with gradient pose size and the commercial gas diffusion layer are respectively installed between a catalytic layer 4 and a bipolar plate 5 to assemble an alkaline anion exchange membrane electrolyser so as to carry out water electrolysis experiments. When operated at the current density of 2 A/cm², the electrolyser assembled with the prepared gas diffusion layer with gradient pose size has a cell voltage of 2.05V, and the electrolyser assembled with the commercial gas diffusion layer has a cell voltage of 2.13V.

### Embodiment 4

Provided is a method for preparing a gas diffusion layer with a gradient pore size for an SPE electrolyser, comprising the following steps:
(1) By mass fraction, 65% of atomized spherical titanium powder having a particle size of 80 µm, 30% of toluene, 1.5% of acrylic resin and 3.5% of PEG400 are mixed by mechanical stirring for 8 h to prepare a slurry.
(2) Tape casting is performed using the slurry obtained in step (1) in a tape casting machine, at a speed of 400 mm/min, a width of 0.5 m and a thickness of 800 µm, to obtain a flat blank.
(3) The flat blank obtained in step (2) is placed to a vacuum furnace, and heated from room temperature to 400 °C at a rate of 5°C /min in argon gas flow at a pressure of 15 mbar and maintained constant at this temperature for 30 min; Then the argon gas flow is stopped, and heating is continued at a rate of 5 °C /min in vacuum at a vacuum degree of 10⁻⁵ mbar to reach 1000 °C and maintain the temperature constant for 120 min, followed by naturally cooling to obtain a microporous diffusion layer.
(4) The microporous diffusion layer obtained in step (3) is preheated to 300°C to use as substrate; A hydride-dehydrate titanium powder of irregular shape having a particle size of 150 µm is sprayed on the surface of the substrate by vacuum plasma spraying. Plasma enthalpy is set at 10 MJ/kg, and the spraying is performed at a speed of 450 mm/s and a pressure of 50 mbar to reach a thickness of 100 µm, thereby obtaining the gas diffusion layer with a gradient pore size.

The microporous diffusion layer 2 of the prepared gas diffusion layer 1 with a gradient pore size has an average pore size of 3.9 µm and a porosity of 42%. The macroporous diffusion layer 3 has an average pore size of 15.7 µm and a porosity of 21%. A commercial gas diffusion layer has an average pore size of 10 µm and a porosity of 30%. The prepared gas diffusion layer with gradient pose size and the commercial gas diffusion layer are respectively installed between a catalytic layer 4 and a bipolar plate 5 to assemble an acid proton exchange membrane electrolyser so as to carry out water electrolysis experiments. When operated at the current density of 2 A/cm², the electrolyser assembled with the prepared gas diffusion layer with gradient pose size has a cell voltage of 1.90V, and the electrolyser assembled with the commercial gas diffusion layer has a cell voltage of 1.98V.

### Embodiment 5

Provided is a method for preparing a gas diffusion layer with a gradient pore size for an SPE electrolyser, comprising the following steps:
(1) By mass fraction, 85% of atomized spherical titanium powder having a particle size of 50 µm, 10% of ethanol, 1.2% of acrylic resin and 3.8% of PEG400 are mixed by mechanical stirring for 12 h to prepare a slurry.
(2) Tape casting is performed using the slurry obtained in step (1) in a tape casting machine, at a speed of 250 mm/min, a width of 1 m and a thickness of 200 µm, to obtain a flat blank.
(3) The flat blank obtained in step (2) is placed to a vacuum furnace, and heated from room temperature to 500 °C at a rate of 1°C /min in argon gas flow at a pressure of 15 mbar and maintained constant at this temperature for 10 min; Then the argon gas flow is stopped, and heating is continued at a rate of 1 °C /min in vacuum at a vacuum degree of 10⁻⁵ mbar to reach 800 °C and maintain the temperature constant for 240 min, followed by naturally cooling to obtain a microporous diffusion layer.
(4) The microporous diffusion layer obtained in step (3) is preheated to 250°C to use as substrate; A hydride-dehydrate titanium powder of irregular shape having a particle size of 100 µm is sprayed on the surface of the substrate by vacuum plasma spraying. Plasma enthalpy is set at 20 MJ/kg, and the spraying is performed at a speed of 350 mm/s and a pressure of 30 mbar to reach a thickness of 400 µm, thereby obtaining the gas diffusion layer with a gradient pore size.

The microporous diffusion layer 2 of the prepared gas diffusion layer 1 with a gradient pore size has an average pore size of 5.1 µm and a porosity of 39%. The macroporous diffusion layer 3 has an average pore size of 16.1 µm and a porosity of 25%. A commercial gas diffusion layer has an average pore size of 10 µm and a porosity of 30%. The prepared gas diffusion layer with gradient pose size and the commercial gas diffusion layer are respectively installed between a catalytic layer 4 and a bipolar plate 5 to assemble an alkaline anion exchange membrane electrolyser so as to carry out water electrolysis experiments. When operated at the current density of 2 A/cm², the electrolyser assembled with the prepared gas diffusion layer with gradient pose size has a cell voltage of 2.01V, and the electrolyser assembled with the commercial gas diffusion layer has a cell voltage of 2.13V.

## Claims

1. A method for preparing a gas diffusion layer with a gradient pore size for an SPE electrolyser, **characterized by** comprising the following steps:
(1) slurry preparation: mixing a titanium powder with solvent, binder and plasticizer under mechanical stirring to prepare a slurry;
(2) tape casting to form a blank: tape casting the slurry obtained in step (1) in a tape casting machine to obtain a flat blank;
(3) vacuum sintering: placing the flat blank obtained in step (2) to a vacuum furnace to perform temperature programmed sintering to obtain a microporous diffusion layer; and
(4) spraying: spraying titanium powder on the microporous diffusion layer obtained in step (3) by vacuum plasma spraying method to prepare a macroporous diffusion layer, thereby obtaining a gas diffusion layer with gradient pore size for an SPE electrolyser.

2. The method according to claim 1, **characterized in that**, the titanium powder in step (1) is an atomized spherical titanium powder with a particle size of 30-80 µm.

3. The method according to claim 1, **characterized in that**, in step (1), the solvent is ethanol, toluene or methanol, the binder is polyvinyl butyral resin or acrylic resin, and the plasticizer is PEG400.

4. The method according to claim 1, **characterized in that**, in step (1), the titanium powder accounts for 65%-85% by mass, the solvent accounts for 10%-30% by mass, the binder accounts for 1%-2% by mass, and the plasticizer accounts for 3%-4% by mass.

5. The method according to claim 1, **characterized in that**, the mechanical stirring in step (1) lasts for 8-24 h.

6. The method according to claim 1, **characterized in that**, in step (2), the tape casting in step (2) has a casting speed of 200-400 mm/min, a casting width of 0.5-2 m, and a casting thickness of 200-800 µm.

7. The method according to claim 1, **characterized in that**, in step (3), the temperature-programmed sintering comprises:
raising the temperature from room temperature to 400-500°C in argon gas flow at a pressure of 10-20 mbar, and maintaining the temperature constant for 10-60 min; and
continuing raising the temperature to 800-1200 °C in vacuum at a vacuum degree of 10⁻⁴-10⁻⁵ mbar, and maintaining the temperature constant for 120-240 min;
wherein during the whole process, the temperature is raised at a rate of 1- 5 °C /min.

8. The method according to claim 1, **characterized in that**, in step (4), the vacuum plasma spraying method is carried out using a hydride-dehydrate titanium powder of irregular shape having a particle size of 100-200 µm as a coating, at a plasma enthalpy of 10-20 MJ/kg, a spraying speed of 300-500 mm/s and a spraying pressure of 30-50 mbar, to reach a coating thickness of 100-400 µm, and the substrate is preheated to 200-300°C prior to the spraying.
